# EUROPEAN PATENT SPECIFICATION

(11) **EP 4 531 330 B1**
(45) Date of publication and mention of the grant of the patent: **11.11.2026**
(21) Application number: 23383000.9
(22) Date of filing: 29.09.2023
(51) Int. Cl.: H04L 9/30

(54) **TENSOR NETWORK-ENHANCED PRIME FACTORIZATION**
TENSORNETZWERKVERSTÄRKTE PRIME-FAKTORISIERUNG
FACTORISATION PREMIERE AMÉLIORÉE PAR UN RÉSEAU TENSEUR

(43) Date of publication of application: 02.04.2025
(73) Proprietor: Multiverse Computing S.L., 20014 Donostia / San Sebastián (ES)
(72) Inventor: Orus, Roman, 20014 Donostia / San Sebastián (ES); Singh, Sukhbinder, 20014 Donostia / San Sebastián (ES)
(74) Representative: Sonnenberg Harrison Partners

(56) References cited:
- WILLIE ABOUMRAD ET AL: "Quantum and Classical Combinatorial Optimizations Applied to Lattice-Based Factorization", ARXIV.ORG, CORNELL UNIVERSITY LIBRARY, 201 OLIN LIBRARY CORNELL UNIVERSITY ITHACA, NY 14853, 15 August 2023 (2023-08-15), XP091592988
- SCHNORR CLAUS PETER ED - LEE SEONG-WHAN ET AL: "Factoring Integers by CVP Algorithms", 31 December 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 73 - 93, ISBN: 978-3-540-74549-5, XP047121942
- DIREBIESKI YURI LUCAS ET AL: "Security Impact Analysis of Degree of Field Extension in Lattice Attacks on Ring-LWE Problem", 2023 IEEE 47TH ANNUAL COMPUTERS, SOFTWARE, AND APPLICATIONS CONFERENCE (COMPSAC), IEEE, 26 June 2023 (2023-06-26), pages 1441 - 1446, XP034390152, [retrieved on 20230802], DOI: 10.1109/COMPSAC57700.2023.00221

## Description

### CROSS-REFERENCE TO RELATED APPLICATIONS

None.

### FIELD OF THE INVENTION

The field of the invention relates to a computer-implemented method and a system for classical optimization problem of integer factorization.

### BACKGROUND OF THE INVENTION

It is known in the prior art that large integers numbers cannot be factorized rapidly which is a main problem of a public-key cryptography. There is no efficient classical (non-quantum) integer factorization algorithm known in the prior art. However, it has not been proven that the efficient non-quantum integer factorization algorithm does not exist. An algorithm that efficiently factors an arbitrary integer can render an RSA-based public-key or other cryptosystems insecure.

The basic idea behind RSA encryption is to use two large prime numbers to generate a public key and a private key. The public key is used to encrypt data, while the private key is used to decrypt the data. The security of the algorithm depends on the fact that it is difficult to factorize large numbers into their prime factors using conventional computers.

In addition to RSA, factorization is also used in other cryptographic algorithms, such as the elliptic curve cryptography (ECC) and the integer factorization-based cryptosystems.

The RSA-based public-key cryptosystem is used for digital signatures, online financial transactions, security of sensitive protocols and information, VPN connections. Therefore, it is important to keep the RSA-based public-key cryptosystem as secure as possible.

A brute force algorithm factorizes a *d*-digit integer number *N* to verify if the *d*-digit integer *N* can be divided by all prime numbers up to $\sqrt{N}$. The time complexity of the brute force algorithm is often proportional to the input size, for example, $\sqrt{N}$ steps to factorize a *d*-digit integer *N*. $\sqrt{N}$ steps is exponential to the number of the digits *d*.

A quadratic sieve algorithm is known to be a more efficient algorithm than the brute force algorithm for prime factorization. The quadratic sieve algorithm tends to construct integers *a, b* such that *a*² - *b*² is a multiple of the integer *N.* Then, when the integers *a, b* are found, the quadratic sieve algorithm checks whether *a* ± *b* have common factors with the integer *N*. The quadratic sieve method has an asymptotic runtime exponential in $\sqrt{d}$.

In a number theory, a general number field sieve (GNFS) algorithm is the most efficient classical algorithm known for factoring integers larger than 10¹⁰⁰. The general number field sieve algorithm achieves an asymptotic runtime complexity that is exponential in *d*^{1/3}. The exponential runtime scaling limits the applicability of the classical factoring algorithms to numbers with a few hundred digits.

It is known that the large integers numbers can be efficiently factorized using a quantum computer via a Shor's algorithm. The Shor's algorithm has computational cost that scales polynomially ≈ *d*³. However, for implementing the Shor's algorithm, it is required computational resources of the quantum computer which are not available in the near future.

Therefore, one of the challenges in the number theory is to develop post-quantum cryptographic protocols, for example, classical cryptographic protocols that are resistant to cryptographic attacks with the quantum computers.

Bao Yan et al., "Factoring integers with sublinear resources on a superconducting quantum processor," arXiv:2212.12372, dated 23 December 2022, teaches one of the solutions to improve the CVP step of the Schnorr's algorithm. The Bao Yan et al. document proposes to combine the Babai's algorithm with a quantum approximate quantum optimization (QAQO) algorithm. The idea of the Bao Yan et al. document is to use a quantum computer for selecting a better approximation from the 2*ⁿ* possible output vectors.

A lattice-based cryptography is known from Antonio Ignacio Vera "A Note on Integer Factorization Using Lattices", pp.12. inria-00467590, dated 27 March 2010. The lattice-based cryptography is one of the main approaches in cryptographic protocols in a post-quantum computing world. In theory, it is possible, that the RSA, Diffie-Hellman, or elliptic-curve cryptosystems could be attacked using the Shor's algorithm on the quantum algorithm. Unlike the RSA, the Diffie-Hellman and the elliptic-curve cryptosystems, the lattice-based cryptography appears to be resistant against cryptographic attacks by a classical computer and by the quantum computer. Non-limiting examples of lattice-based cryptographic protocols include Knapsack algorithm, Coppersmith algorithm, NTRU algorithm, LWR algorithm, and Schnorr's algorithm.

A known challenging computational problem in lattice-based cryptographic constructions is a Shortest Vector Problem (SVP). In the lattice-based problems, an input of the lattice-based cryptographic construction is a lattice represented by an arbitrary basis, and a solution to the SVP is an output with the shortest non-zero vector in the lattice. The SVP is considered to be NP-hard (non-deterministic polynomial-time hardness) problem even with approximation factors which are polynomial in the lattice. The SVP problem is considered challenging to be solved even using the quantum computer.

Schnorr's algorithm is considered to be one of the most efficient lattice-based factoring algorithms. However, recent research claimed that the Schnorr's algorithm could challenge the RSA. As in known lattice-based factoring algorithms, the main challenge of the Schnorr's algorithm is the SVP and a closest vector problem (CVP). The CVP is a computational problem on the lattices closely related to the SVP. Given a lattice *L* and a target point ~*x*, the CVP aims to find the lattice point closest to the target point *x*. The SVP and the CVP can be defined with respect to any norm, but the Euclidean norm is the most common.

Another known challenge with the Schnorr's algorithm is that the quality of factors output by the Schnorr's algorithm is strongly dependent on the quality of the CVP solution. The main limitation of the Schnorr's algorithm is inability to solve the CVP to a high enough accuracy. The generic CVP is known to be an NP-hard problem and the CVP underlying Schnorr's algorithm is formulated for a particular type of the lattice, often called a prime number lattice.

It has been proposed a new quantum algorithm to improve the CVP step part of the Schnorr's algorithm by Bao Yan et al., "Factoring integers with sublinear resources on a superconducting quantum processor," arXiv:2212.12372, dated 23 December 2022.

The present document represents an improvement on the state-of the art classical approach to improve the CVP step of the Schnorr's algorithm and thus enable more efficient factorisation of large numbers.

The Bao Yan et al., document assigns an unknown binary variable to the floating-point coefficient of the output vector obtained by Babai's algorithm or BKZ algorithm. Assigning an unknown binary variable enables to encode the choice of rounding of the floating-point coefficients up or down to the closest integer number. Therefore, it is proposed to determine an optimal value of the unknown binary variables by solving an optimization problem, for example, by minimizing a distance to the specified target. To solve this optimization problem, the classical resources are required that scale exponentially with the lattice dimension.

For this reason, the Bao Yan et al., document proposes to solve the optimization problem using the QOQA algorithm on the quantum computer. A cost function of the optimization problem can be expressed as a connected classical Ising spin glass Hamiltonians. The cost function can also be encoded as a quantum Hamiltonian. Ground state of the quantum Hamiltonian determined by the QAQO algorithm correspond to the solution of the classical optimization problem.

The Bao Yan et al., document implements the optimization problem by factoring integers up to 48 bits, which requires up to 10 qubits on the quantum computer. The method presented by the document by Bao Yan et al. could challenge the RSA and would require 372 qubits and a circuit depth of thousands. However, it is still inconceivable when the proposed quantum algorithm can be implemented practically.

The present document describes an enhanced classical Schnorr's algorithm. In the present document, the prior art QAQO algorithm is replaced with a quantum-inspired algorithm named a time-evolving block decimation (TEBD) algorithm. The TEBD algorithm is known, for example, from Guifré Vidal, "Efficient Classical Simulation of Slightly Entangled Quantum Computations". Physical Review Letters. 91 (14): 147902. arXiv:quant-ph/0301063, dated 26 February 2003.

The TEBD algorithm was invented to find ground states of quantum Hamiltonians, for example the quantum Ising model in one dimension. In the present document, the TEBD algorithm is applied directly to solve the classical optimization problem to improve the CVP step of the Schnorr's algorithm.

However, the direct application of the prior art TEBD algorithms for the classical optimization problem is not accurate enough to improve the Schnorr's algorithm for large-sized integers.

Willie Aboumrad et al: "Quantum and classical combinatorial optimizations applied to Lattice-Based Factorization", arxiv.org, Cornell University Library, 201 Olin Library Cornell University Ithaca, NY 14853, 15 August 2023, XP091592988 describes a computer implemented method for solving a classical optimization problem of integer factorization, the method comprising:
- inputting a lattice basis and a target lattice vector to an input device of the classical processor;
- implementing a lattice basis reduction algorithm on the lattice basis in an implementation module, thereby obtaining a reduced orthogonal lattice basis;
- projecting the target lattice vector on the reduced orthogonal lattice basis;
- building a closest vector to the target lattice vector; and
- outputting an integer vector.

Therefore, one of the challenges to factorize the large numbers is to adapt the TEBD algorithm to the classical optimization problems. The present document describes a "Tropical TEBD" algorithm, a novel implementation of the TEBD algorithm that enhances a non-quantum nature of the classical optimization problem and overcomes the generation of excess entanglement known in the prior art TEBD algorithm.

### BRIEF SUMMARY OF THE INVENTION

A computer implemented method for solving a classical optimization problem of integer factorization is described. The computer implemented method is implemented on a digital computer system comprising a classical processor adapted to execute a tropical time evolving block decimation algorithm. The method comprises a first step of inputting a lattice basis and a target lattice vector to an input device of the classical processor. In a second step, a lattice basis reduction algorithm is implemented on the lattice basis in an implementation module and a reduced orthogonal lattice basis is thereby obtained. In a third step, the target lattice vector is projected on the reduced orthogonal lattice basis, followed by a step of building a closest vector to the target lattice vector. Finally, the method set out in this document comprises a step of optimizing, by the classical processor, the closest vector using a tropical time-evolving block decimation algorithm by replacing regular matrices with exponentially small values with tropical matrices, and rounding down floating-point coefficients of the closest vector to obtain an integer vector and outputting the integer vector.

In one aspect, the integer vector represents the shortest distance between the lattice basis and the target lattice vector.

The method may comprise a step of calculation of smooth-relation pairs from the integer vector.

In another aspect, the lattice basis reduction algorithm is a Lenstra-Lenstra-Lovasz lattice basis reduction algorithm.

The method may comprise a step building a closest vector comprises determining floating-point coefficients of the optimal closest vector.

The method may further comprise a step of applying a rounding function to the reduced orthogonal lattice basis.

A computer system for solving a classical optimization problem of integer factorization implemented on a digital computer system is also described in this document. The computer system comprises a memory for storing data relating to a lattice basis, a target lattice vector and executable computer modules. The system further comprises a processor for executing the executable computer modules. The executable computer modules comprise an implementation module for implementing a lattice basis reduction algorithm on the lattice basis and a time evolving block decimation (TEBD) module for optimizing the closest vector B using a tropical time-evolving block decimation algorithm by the classical processor by replacing regular matrices with exponentially small values with tropical matrices, and rounding down floating-point coefficients of the closest vector B to obtain an integer vector. The digital computer system is adapted to build a closest vector to the target lattice vector.

The computer system may further comprise a tropicalization module for implementing a tropicalization map and a de-Tropicalization map.

The computer system may further comprise a decomposition module for decomposition of a Hamiltonian into two-variable Hamiltonians.

A use of the computer implemented method for solving a classical optimization problem of integer factorization is described. The shortest distance between the lattice basis and the target lattice vector is representative of one of a lattice-based cryptography, post-quantum cryptographic protocols, number theory.

A computer system for decrypting cyphertext is described in this document. The computer system comprises a decryption module comprising a RSA cryptosystem implementing an algorithm for decrypting the cyphertext. The algorithm for decrypting the cyphertext uses a computer implemented method for solving a classical optimization problem of integer factorization.

### DESCRIPTION OF THE FIGURES

Fig. 1 shows an example of a computer system for implementing the method of this document.
Fig. 2 shows examples of matrix product states.
Fig. 3 shows an example of a TEBD algorithm.
Fig. 4 shows an optimised TEBD algorithm.
Fig. 5 shows a flow chart of prior art Schnorr's algorithm.
Fig. 6 shows a flow chart of the method of this document.
Fig. 7 shows a flow chart of a method of decryption of a ciphertext using Schnorr's algorithm.

### DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims. It will be understood that features of one aspect or embodiment of the invention can be combined with a feature of a different aspect or aspects and/or embodiments of the invention.

The prior-art Schnorr's algorithm for factorization of the integer *N* will be now described.

The Schnorr's algorithm improves the quadratic sieve algorithm by using the complex lattice techniques. The Schnorr's algorithm is based on smooth numbers, the smooth numbers have only small prime factors. The first step of the Schnorr's algorithm is to choose a smoothness bound *B.* The smoothness bound *B* determines the maximum size of the prime factors. The larger the smoothness bound *B*, the greater chance of finding the smooth number, but also the longer time is needed to find the smooth number.

The second step of the Schnorr's algorithm is to fix a natural number *d* ≥ 1 and suppose that all the prime factors of *N* are less than equal to *p_{d}*, wherein *p_{d}* is the smoothness bound, *B* = *p_{d}*.

The positive integer *N* is the integer that the Schnorr's algorithm aims to factorize. The Schnorr's algorithm uses a congruence of squares method which consists of finding $x , y ∈ ℤ$ such that *x*² ≡ *y*² *mod N* with *x* ≢ ± *y mod N*. According to the Schnorr's algorithm, the integer *N* can be calculated by computing *gcd*(*x + y, N*). For random *x, y* satisfying *x* ≢ ± *y mod N* with probability ≥ 1/2.

The smoothness bound *B* is an integer that does not have the prime factors > B and *pᵢ* is the *i*-th prime number. Fix some *d* ≥ 1 and suppose that the positive integer *N* is free of the prime factors ≤ *p_{d}*. The main computational task of the Schnorr's algorithm is to find *d* + 2 integer tuples (*u, v, k, γ*). The integer tuples (sequence) *u, v* are *p_{d}*-smooth numbers, *k* comprises with the prime factor *N* and *γ* > 0, and fulfil the Diophantine equation: $u = v + {kN}^{γ}$

Numbers *u, v* with the properties that fulfil the Diophantine equation are called smooth-relation pairs. Calculation of the smooth-relation pairs *u, v* is the main task of the Schnorr's algorithm.

The smooth-relation pairs *u, v* of *p_{d}*-smooth numbers must satisfy the inequality: $\left|u-kN\right| < = {p}_{d}$

The solution of the smooth-relation pairs can be found by setting *v = u - kN*. This equation provides the *p_{d}*-smoothness of smooth-relation number *v*.

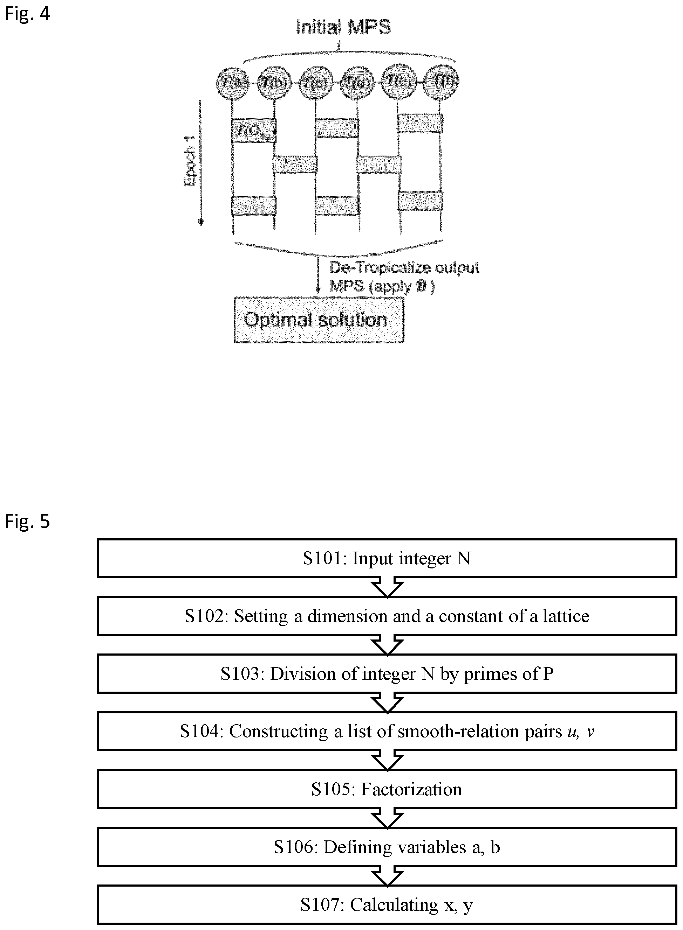

Fig. 5 shows a flow chart of prior art Schnorr's algorithm.

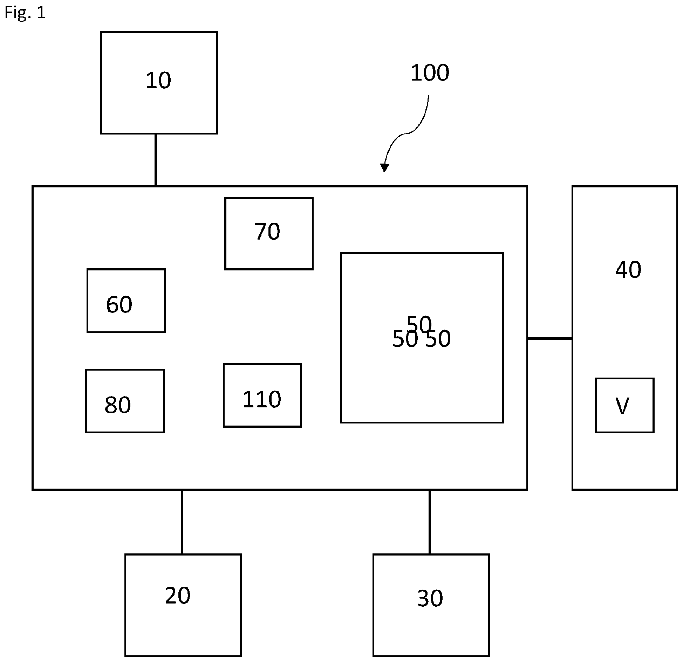

In step S101, the input number N is received to the input of a processor 10 (Fig. 1).

In step S102, a dimension *d* and a constant *C* of the lattice *Sₚ*(*d, C*) are set and an extended prime number list P = {*p*₀, *p*₁, ..., *p_{d}*} is formed. Where *p*₀ = -1 and the rest is the usual sequence of the first *d* prime numbers.

In step S103, a trivial division of *N* by the primes of P is performed. The factor is returned if the input number *N* is factorized.

In step S104, a list of at least *d*+2 integer tuples $\left({u}_{i}, {k}_{i}\right) ∈ ℕ \times ℤ$ is constructed using the lattice. Where *uᵢ* is *p_{d}*-smooth with ${u}_{i} = {\prod }_{i = 0}^{d} {p}_{i}^{{a}_{i , j}}$

Wherein *a*_{*i*,0} = 0 and $\left|u-kN\right| < = {p}_{d} .$

In step S105, *uᵢ - kᵢN*, for $i ∈ \left〚1, d+2\right〛$ is factorized over P to obtain: ${u}_{i} - {k}_{i} N = {u}_{i} = {\prod }_{i = 0}^{d} {p}_{i}^{{b}_{i , j}} .$

In step S106, variables *aᵢ* and *bᵢ* are defined such as *aᵢ* = (*a*_{*i,*0}, ..., *a_{i,d}*) and *bᵢ =* (*b*_{*i,*0}, ..., *b_{i,d}*).

For every nonzero *c = aᵢ* = (*c*₁, ..., *c*_{*d*+1}) ∈ {0, 1}^{*d*+1} solution of ${\sum }_{j = 0}^{d + 1} {c}_{i} \left({a}_{i}+{b}_{i}\right) = 0 mod 2$

In step S107, variables *x* and *y* are calculated as follows: $x = {\prod }_{j = 0}^{d + 2} {p}_{j}^{{\sum }_{i = 1}^{d + 2} {c}_{i} \left({a}_{i , j}+{b}_{i , j}\right) / 2} mod N$ and $y = {\prod }_{j = 1}^{d + 2} {p}_{j}^{{\sum }_{i = 1}^{d + 2} {c}_{i} , {a}_{i , j}} mod N$

In step S108, *gcd(x+y, N)* is returned if *x* ≠ ± *y mod N* and the method is stopped.

The problem of finding the smooth-relation pair *u, v* is reduced to the CVP problem for a particular target vector on a particular lattice, for example, a prime number lattice. The probability of obtaining the smooth-relation pair *u, v* is proportional to the quality of the CVP solution. The CVP problem is solved using classical algorithms such as Babai's algorithm or Block Korkin Zolotarev (BKZ) algorithm. However, Babai's and BKZ algorithms are not capable of solving the CVP problem of the Schnorr's algorithm with a desired accuracy, which results in an unsatisfactory performance of the Schnorr's algorithm.

The present document teaches a quantum inspired algorithm that improves the CVP step of the Schnorr's algorithm.

To improve the CVP step, the classical Schnorr's algorithm implements three main steps. The first step of the CVP prior art improvement is an Lenstra-Lenstra-Lovasz (LLL) lattice basis reduction algorithm of an input lattice basis. The input lattice basis is a set of linearly independent vectors inside an ambient vector space. The properties of a resulting LLL lattice basis can be improved to solve the CVP problem.

The second step of the CVP prior art improvement is projecting a target vector to a Gram-Schmidt orthogonalization method of the LLL lattice basis. Given the LLL lattice and a target point ~*x*, the CVP aims to find a lattice point which is closest to the target point x. The lattice point is a point at an intersection of two or more linearly independent vectors of the LLL lattice. This second step returns an output vector close to the target vector with an approximation error. Coefficients of the output vector are floating-point numbers. The LLL lattice basis is not necessarily orthogonal, thus the Gram-Schmidt orthogonalization of the LLL lattice basis does not necessarily returns a basis of the lattice. In some cases, the Gram-Schmidt orthogonalization of the LLL lattice basis returns only the subspace of the ambient vector space in which the lattice LLL is embedded. In other words, the lattice points of the LLL lattice are generated by translation of vectors which are not orthogonal. The ambient vector space can be described with a basis of perpendicular vectors, for example, the three cartesian axis. However, to generate the lattice points of the LLL lattice, the non-orthogonal vectors need to be used.

The third step of the CVP prior art improvement is building a candidate closest vector by rounding, to the nearest integer number, the floating-point coefficients of the output vector obtained in the second step.

The approximation error of the candidate closest vector has integer coefficients and depends significantly on the choice of rounding the floating-point coefficients to the nearest integer number used in the third step. The floating-point coefficient in the third step can be rounded up to the nearest integer number or down to the nearest integer number. Therefore, there are 2*ⁿ* different options for choosing the candidate closest vector, where *n* is the dimension of the lattice basis and equal to a size of the target vector.

The classical Schnorr's algorithm fixes a particular choice of the rounding the coefficients, for example, by rounding down all the floating-point coefficients and by returning, therefore, one of the possible 2*ⁿ* different output vectors.

In contrast to the prior art quantum algorithms, the advantage of a quantum-inspired Schnorr's algorithm described in this document is that this enhanced algorithm is already scalable to hundreds of qubits.

Fig. 1 shows an example of a computing system for implementing the computer-implemented method of this document. Fig. 1 shows a system 100 having a (classical) processor 10 with an input device 20 and an output device 30. The system 100 is shown using a classical processor 10, but it will be appreciated that the system 100 can be extended with the addition of a quantum processor connected to the classical processor 10. The system 100 further includes a decryption module 110 which is used to decrypt a cyphertext encoded, for example, using the RSA algorithm.

The TEBD algorithmic method is implemented by software on a TEBD module 50 running in the processor 10. An input to the TEBD algorithm running in the processor 10 is a set of integers u, v, k, *γ* and a Hamiltonian *H*(*x*₁, *x*₂, ... *xₙ*). This input is provided through the input device 10 and stored in a memory 40 which is accessible from the TEBD module 50. The integers *u, v, k, γ ∈ Z* such that *x*² *= y*² *mod N*, with *N* ≥ *1* be a composite integer that needs to be factorized for the classical optimization problem.

In the classical optimization problem, the Hamiltonian *H* encodes with the smooth-relation pairs representative of the problem to be solved. To set up the TEBD algorithm for the classical optimization problem, the smooth-relation pairs need to be mapped to the Hamiltonian. This mapping is done in an implementation module 80 in the processor 10. It will be understood that the Hamiltonian *H* is a quantum Hamiltonian function that acts on a vector space *V*. The vector space V is spanned by classical states corresponding to classical configurations of the integers *u, v, k, γ*. The vector space V is a set of all vectors of the form: $V = {\sum }_{{x}_{1} , {x}_{2} , … {x}_{n}} C {x}_{1} , {x}_{2} , … {x}_{n} \left|{x}_{1},{x}_{2},…{x}_{n}\right〉$
where coefficients ***C** x*₁, *x*₂, ... *xₙ* are real numbers and | *x*₁, *x*₂, ... *xₙ* > is a quantum state corresponding to the classical configuration of the integers *u, v, k, γ*.

An output of the TEBD module 50 implementing the TEBD algorithm is provided at the output device 30 and is the ground state of the Hamiltonian. This output is, in the case of the classical optimization problem, is the smooth-relation pairs *u, v* which satisfies the Diophantine equation (e.g., a classical state) and will be a solution to the classical optimization problem. For more general Hamiltonian functions, the ground state could be an entangled state of the form of the vector space *V* with several non-zero coefficients ***C** x*₁, *x*₂, ... *xₙ*.

The Hamiltonian can be decomposed as a sum of two smaller variable Hamiltonian as follows: $H \left({x}_{1},{x}_{2},…{x}_{n}\right) = {\sum }_{ij} {H}_{ij} \left({x}_{i}, {x}_{j}\right)$ (1)

It should be noted that in the sum of Hamiltonians, there is exactly one two-variable Hamiltonian terms for every pair of variables. A compact notation of the Hamiltonian will be further used: *Hᵢⱼ = Hᵢⱼ*(*xᵢ, xⱼ*). This decomposition of the input Hamiltonian is carried out in a decomposition module 60 in the processor 10.

The TEBD algorithm iteratively evolves in the TEBD module 50 from the input data. The input data are a set of integers *u, v, k, y* which are represented by a vector inside the vector space V. The TEBD algorithm iteratively evolves for a time *T = N* × *t* via an imaginary time-evolution operator *O*: $O = exp \left(-t\times H\right)$ (2)

The state at time *t=k+1* is obtained by multiplying a state vector at time *k* with the imaginary time-evolution operator *O*: $\left|state at T=k+1\right〉 = exp \left(-t\times H\right) \left|state at T=k\right〉$ (3)

It can be shown that if the initial state is not orthogonal to the ground state, then the imaginary time-evolution operator *O* will tend to the ground state as longer times are involved, e.g., when the value of the time *T* becomes longer.

One issue is that with the increase in size of the classical optimization problem, i.e., with an increase in the number of the integers, then the size of the state vectors and the imaginary time-evolution operator *O* increase exponentially.

Two ideas can be applied to the TEBD algorithm which make the TEBD algorithm efficient and scalable algorithm.

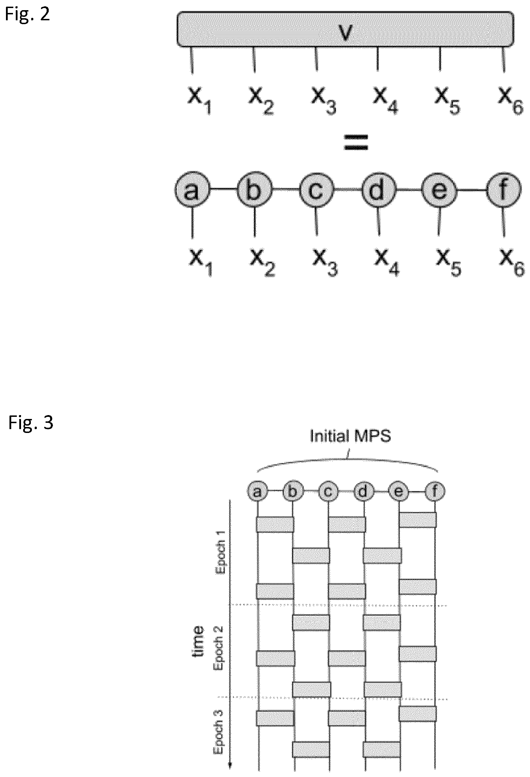

The first idea of the TEBD algorithm is to restrict the time evolution of the TEBD algorithm to only to a particular subset of states in the vector space *V* called Matrix Product States (MPS), or Tensor Trains as illustrated in Fig. 2. This subset of states is stored in the memory 40. The MPS is a type of Tensor Network (TN) in which the tensors are arranged in a one-dimensional geometry. The MPS can represent a large number of classical states extremely well despite the simple structure of the MPS.

One way to deal with exponentials presented in the equation (2) is to decompose the imaginary time-evolution operator *O* for "sufficiently small" time steps using the Suzuki-Trotter decomposition. The Suzuki-Trotter decomposition provides an approximation to a matrix exponential by decomposing the matrix exponential into a product of simpler operators. Specifically, the Suzuki-Trotter decomposition decomposes the exponential of a sum of two operators A and B as follow: $exp \left(t\left(A+B\right)\right. \approx exp \left(tA\right) . exp \left(tB\right)$

Where t is a small time step. This decomposition allows the split of the time evolution into a number of separate time steps, each time step corresponding to the exponentiation of a single operator A, B. By choosing an appropriate time step *t* and iterating the decomposition, it is possible to approximate the time evolution of the system.

The second idea is to decompose (approximately) a total n-variable imaginary time-evolution operator *O* as a product of two variable operators: $O \approx {E}^{N} = {\left({π}_{ij}exp\left(-t\times {H}_{ij}\right)\right)}^{N}$ (4)

An operator *E* implements a single epoch *N* of the time evolution of the imaginary time-evolution operation O, for example, a single round of all two-variable time-evolution operators *O* for the time step *t*. The two-variable time evolution exp(-*t* × *Hᵢⱼ*) should be understood as an identity operator on all remaining variables *i* and*j*.

It will be appreciated that, if the result of the time evolution of the Hamiltonian depends on the order in which the two-variable time evolutions are applied to the Hamiltonian, the Suzuki-Trotter decomposition is only an approximate decomposition. Mathematically, the time evolution is an order-dependent function if the two-variable Hamiltonians (e.g., Hamiltonian matrices) do not commute. The two-variable Hamiltonian functions do not commute when there are coefficients *i, j* and *i, k* such that *Hᵢⱼ* × *Hᵢₖ* ≠ *Hᵢₖ* × *Hᵢⱼ*. The Suzuki-Trotter approximation error in this (non-commutation case) is of the second order - *t*². Therefore, the parameter of the time step *t* of the TEBD algorithm for the evolution has to be chosen carefully to minimise the approximation error, but to avoid too long computation time.

The TEBD algorithm converges to the ground state after a relatively long-time evolution, for example, when the epoch *N = T*/*t* is large. As noted above, to keep the Suzuki-Trotter approximation error small, the steps of the time evolution have to be carried out during the small period of time step *t*.

According to the decomposition of the imaginary time-evolution operator O shown in equation (4), the TEBD algorithm reduces in the TEBD module 50 to applying, on a chosen initial MPS from the memory 40, a sequence of small imaginary time-evolutions on pairs of neighbouring variables until convergence.

Fig. 2 shows an example of the TEBD algorithm as implemented in the TEBD module 50. Rectangular boxes in Fig. 2 implement the two-variable time-evolutions. The rectangular boxes in Fig. 2 are also called "gates" in analogy to quantum circuits. However, unlike the quantum circuits, the gates are not unitary.

The TEBD algorithm running in the TEBD module 50 proceeds by iteratively updating the MPS stored in the memory 40 by applying the gates one by one to the parameters of the MPS. After a sufficient number of epochs N, typically a very large number of epochs, the value of the MPS converges to the ground state of the Hamiltonian.

When the TEBD algorithm is applied to the classical optimization problem, the ground state of the Hamiltonian is an approximation to the optimal value of the smooth-relation pairs of the classical optimization problem. The use of the MPS, the decomposition of the imaginary time-evolution operator *O* into two-variable gates, and the ability to update the MPS only locally for the two-variable gates are the main reasons for high scalability of the TEBD algorithm.

The most computationally intensive step is updating the values of the parameters in the MPS stored in the memory 40 after applying the gates. The updating of the MPS comprises a sequence of matrix multiplications and a singular value decomposition carried out in the TEBD module 50. The singular value decomposition is the main computational challenge of the TEBD algorithm running in the TEBD module 50 on the classical processor 10.

The TEBD algorithm has been a common algorithm for finding the ground states of the quantum Hamiltonians *H*. However, applying the TEBD algorithm to find the ground state of classical Hamiltonians is a known challenge in the classical optimization problem. The structural difference between the quantum Hamiltonian and the classical Hamiltonian can be explained mathematically. In the classical systems, classical operators commute with each other.

Therefore, a direct application of the TEBD algorithm to the classical optimization problem (formulated as a Hamiltonian problem) does not exploit the inherent classical structure of the classical optimization problem. Numerical experiments show that the TEBD algorithm tends to explore highly entangled quantum states during the search in the vector space for the optimal smooth-relation pairs of the classical optimization problem.

This exploring of the highly entangled quantum states is a disadvantage of the TEBD algorithm since the computational cost of running the TEBD algorithm on the classical processor 10 increases with the amount of entanglement of the quantum states generated during the TEBD algorithm.

In the present document, the adaptation of the TEBD algorithm for the classical optimization problem is described. The adaptation of the TEBD algorithm exploits the classical structure of the classical optimization problem that improves the performance and accuracy of the TEBD algorithm.

The present document adapts the TEBD algorithm in the TEBD module 50 to tropical algebra instead of regular algebra. Regular algebra is known to be large and complex system. The TEBD algorithm is based on the regular algebra of complex matrices. However, only a special subset of matrices needs to be used in the case of classical combinatorial optimization problem. The special subset of matrices that is used in the improved TEBD algorithm is the tropical matrices.

The tropical algebra is employed for solving large-sized integer numbers. In the case of the classical optimization problem, the two-variable Hamiltonian terms *Hᵢⱼ* are diagonal matrices which commute with each other. The decomposition of the imaginary time-evolution operator *O* described by the equation (4) is exact in the case of the diagonal matrices.

The exact decomposition means that there is no Suzuki-Trotter approximation error, as known in the prior art and discussed above. Since there is no Suzuki-Trotter approximation error, the time step *t* does not have to be small in the equation (4). Therefore, it is possible to choose the time step *t* to be as large as possible.

The TEBD algorithm converges to the ground state when *T* → ∞, and that *T = N* × *t*, where *t* is the time-step for the time-evolution and *N* is the number of the epochs. As noted above, there is no restriction on how large the time step *t* has to be. It is therefore possible to take the limit of time step *t* → ∞ and set the number of the epochs *N*=*1*. Therefore, the optimal solution of the classical optimization problem can be achieved using only one epoch N of the time evolution, when the time step *t* is set to be a very large number.

However, setting the time step *t* to a large number of results in "ill-conditioned" matrices. For example, a small change in inputs variables causes a large change in dependent variables. Matrix operations used in the TEBD module 50 are the matrix multiplication and the singular value decomposition. The "ill-conditioned" matrices can produce therefore unpredictable results. Therefore, the main computational challenge is to operate on the matrices with exponentially small entries.

Since the Hamiltonian terms *Hᵢⱼ* are diagonal, the two-variable gates *Uᵢⱼ =* exp (-*t* × *Hᵢⱼ*) are also diagonal matrices as follows: $diag \left(exp\left(-t\times p\right), exp\left(-t\times q\right),…,exp\left(-t\times r\right)\right)$

The arrays comprising the initial MPS can be chosen to be composed of zeros and ones, which can be expressed as follows: $0 = exp \left(-t\times ∞\right) and 1 = exp \left(-t\times 0\right)$ (5)

All numbers in the problem are of the form: $exp \left(-t\times p\right) with t \to ∞$ (6)

Therefore, most of the matrix operations, except the singular value decomposition, used in the TEBD algorithm comprise multiplying and adding numbers of the form expressed in the equation (6). Therefore: $exp \left(-t\times p\right) + exp \left(-t\times q\right) = exp \left(-t\times min \left(p, q\right)\right)$ (7) $exp \left(-t\times p\right) \times exp \left(-t\times q\right) = exp \left(-t\times \left(p+q\right)\right)$ (8)

An equation in the equation (7) is without Suzuki-Trotter approximation error when the time step *t* → ∞. The result of the expression in the equation (7) is approximate (with the Suzuki-Trotter approximation error) when the time step *t* takes finite values.

Since the numbers of the equation (6) are in the form of exp(-*t* × *p*) *with t* - ∞, it is possible to use the concepts of tropical geometry and restrict the solution of the equation (6) to the exponential components *p, q*. Therefore, the equations (7) and (8) can be expressed as follows: $p ⊕ q = min \left(p, q\right)$ (9) $p ⊙ q = p + q$ (10)

Real numbers along with the positive infinity (∞) that fulfil the equations (9) and (10) are related to the tropical algebra. The tropical algebra is defined by replacing a usual addition operator for ordinary real numbers with a min operator and a product or multiplication operator with a sum operator. It is known that (-∞) acts as zero element for tropical numbers since -∞⊕ p = p and -∞⊙p = -∞. A zero element acts as a multiplicative identity since 0⊙p = p. The min operator ⊕ and the sum operator ⊙ have commutative, associative, and distributive properties. It is known that the min operator ⊕ and the sum operator ⊙ have no additive inverse.

The equations (7) and (8) are a one-dimensional representation of tropical algebra T (⊕, ⊙). The tropical numbers provide a way to solve the problem of "ill-conditioned" matrices in the TEBD algorithm. Changing the regular matrices with exponentially small values to the tropical matrices of the equations (9) and (10) avoids operating directly with the ill-conditioned matrices known in the prior art TEBD algorithms.

In the TEBD algorithm of the present document, a tropicalization map T is implemented in a tropicalization module 70. As is known from tropical algebra, the tropicalization module 70 converts the exponentials to a real number: $T : exp \left(-t\times p\right) ↦ p$ (11)

Therefore, a corresponding de-Tropicalization map D (also in the tropicalization module 70) is: $D : p ↦ exp \left(-t\times p\right)$ (12)

As noted above, by tropicalizing the TEBD algorithm, it is avoided to work with the ill-conditioned matrices. All the matrices of the TEBD algorithm are diagonal and exponentiating all the matrices with a large parameter of the time-step t.

The tropical TEBD algorithm described in the present document enables optimization of the computational resources by exploring an optimal subspace of large quantum space while looking for the optimal classical solution of the classical optimization problem.

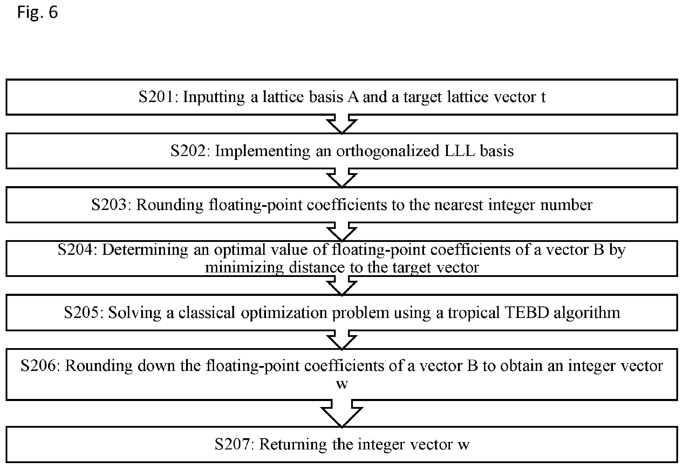

The optimized tropical TEBD algorithm is shown in Fig. 6.

In step S201, a lattice basis and a target lattice vector are input to the classical processor 10.

In step S202, an orthogonalized LLL basis is calculated.

In step S203, the target lattice vector is projected to the orthogonalized LLL in order to obtain the vector *v*.

In step S204, the floating-point coefficients are rounded up or down to the nearest integer.

In step S205, an optimal value of binary variables is determined by minimizing distance to the target lattice vector.

In step S206, closest vector problem is solved using the tropical TEBD algorithm.

In step S207, the floating-point coefficients are rounded down to obtain an integer vector w.

In step S208, the integer vector *w* is returned.

The integer vector *w* being the lattice point closest to the target point *x*.

The run time complexity of Schnorr's algorithm for factoring the integer *N* is $exp \left(\left(1/2+o\left(1\right)\right) \sqrt{\left(log\left(N\right) loglog\left(N\right.\right)}\right)$. This means that the running time of the algorithm grows roughly as the square root of the product of the number of digits *d* in *N* and the logarithm of *d*. In other words, the algorithm is sub-exponential, meaning it is faster than the brute-force algorithm but slower than most known polynomial-time algorithms.

The performance of Schnorr's algorithm depends on the chosen smoothness bound *B.* A larger smoothness bound *B* can increase the chances of finding smooth numbers and therefore reduce the running time of the algorithm, but it also requires more computational resources to check.

In practice, the running time of Schnorr's algorithm can vary widely depending on the size and structure of the input integer *N*, the choice of smoothness bound *B*, and the efficiency of the implementation.

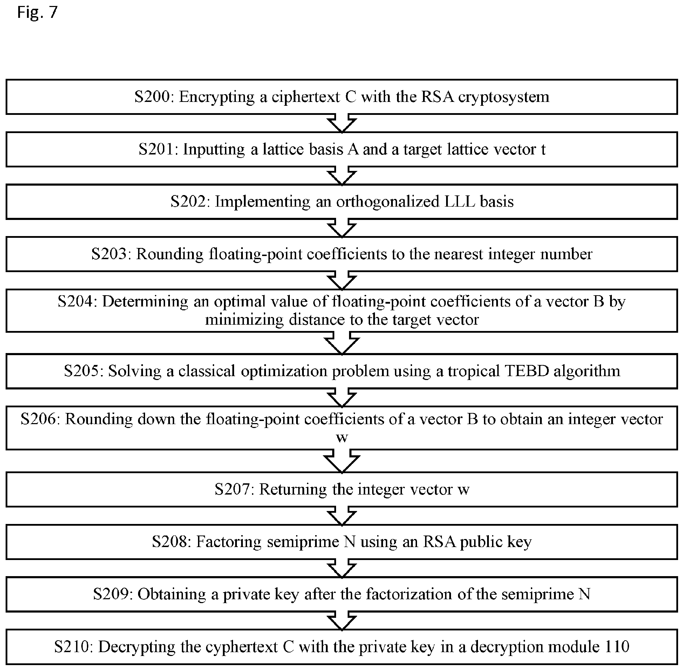

The method set out in this document can be used to factorise a large number and thus decrypt encrypted messages. In one non-limiting example, the steps S201-S207 of the optimized tropical TEBD algorithm shown on Fig. 6 can be implemented in a method of decryption of a ciphertext using Schnorr's algorithm shown on Fig. 7. In addition to the steps S201-S207 shown on Fig. 6, Fig. 7 also comprises a step S200 and steps S208-S210.

The RSA cryptosystem, for example, uses an encryption key to encrypt in step S200 a message. The encryption key is public and is based on the semiprime (i.e., product) N of two randomly chosen large prime numbers (often termed p and q). As previously noted, the security of the RSA (and other cryptosystems) relies on the fact that the factorisation of the semiprime N is challenging. The method of this document is incorporation into the decryption module 110 using Schnorr's algorithm to decrypt a ciphertext C which has been encoded using the RSA cryptosystem. The decryption module 110 uses an RSA public key (N, e) and factors in step S208 the semiprime N. An RSA key setup routine already turns the public exponent e, with this prime factorization, into a private exponent d, and the same algorithm will enable the decryption module to obtain in step S209 the private key after factorisation of the semiprime N. The ciphertext C can then be decrypted in step S210 with the private key identified in the decryption module 110.

### REFERENCE NUMBER

- 10: Processor
- 20: Input device
- 30: Output device
- 40: Memory
- 50: TEBD module
- 60: Decomposition module
- 70: Tropicalization module
- 80: Implementation module
- 100: System
- 110: Decryption module
- V: Vector space

## Claims

1. A computer implemented method for solving a classical optimization problem of integer factorization implemented on a digital computer system comprising a classical processor (10) adapted to execute a tropical time evolving block decimation (TEBD) algorithm, the method comprising:
- inputting (S201) a lattice basis A and a target lattice vector *t* to an input device (20) of the classical processor (10);
- implementing (S202) a lattice basis reduction algorithm on the lattice basis A in an implementation module (80), thereby obtaining a reduced orthogonal lattice basis A';
- projecting the target lattice vector t on the reduced orthogonal lattice basis A';
- building a closest vector B to the target lattice vector t;
- optimizing (S205) the closest vector B using the tropical time-evolving block decimation algorithm by the classical processor (10), wherein the tropical time-evolving block decimation algorithm replaces regular matrices with exponentially small values with tropical matrices, and rounding down floating-point coefficients of the optimal closest vector B to obtain an integer vector *w*; and
outputting (S207) the integer vector *w*.

2. The computer implemented method of claim 1, wherein the integer vector w represents the shortest distance between the lattice basis A and the target lattice vector *t*, wherein, preferably, the shortest distance is representative of one of a lattice-based cryptography, post-quantum cryptographic protocols, number theory.

3. The computer implemented method of any of above claims, further comprising calculation of smooth-relation pairs from the integer vector w.

4. The computer implemented method of any of above claims, wherein the lattice basis reduction algorithm is a Lenstra-Lenstra-Lovasz lattice basis reduction algorithm.

5. The computer implemented method of any of above claims, wherein building a closest vector B comprises determining (S204) floating-point coefficients of the optimal closest vector B.

6. The computer implemented method of any of above claims, further comprising applying (S203) a rounding function to the reduced orthogonal lattice basis A'.

7. A computer system for solving a classical optimization problem of integer factorization implemented on a digital computer system comprising:
- a memory (40) for storing data relating to a lattice basis A, a target lattice vector *t* and executable computer modules;
- a processor (10) for executing the executable computer modules, wherein the executable computer modules comprising:
- an implementation module (80) for implementing (S202) a lattice basis reduction algorithm on the lattice basis A to obtain a reduced orthogonal lattice basis A', wherein the computer system is adapted to project the target lattice vector t on the reduced orthogonal lattice basis A' and is furhter adapted to build a closest vector B to the target lattice vector t; and
- a time evolving block decimation (TEBD) module (50) for optimizing (S205) the closest vector B using a tropical time-evolving block decimation algorithm by the classical processor (10), wherein the tropical time-evolving block decimation algorithm replaces regular matrices with exponentially small values with tropical matrices, and rounding down floating-point coefficients of the optimal closest vector B to obtain an integer vector *w*.

8. The computer system of claim 7, further comprising a tropicalization module (70) for implementing a tropicalization map T and a de-Tropicalization map D.

9. The computer system of claim 7, further comprising a decomposition module (60) for decomposition of a Hamiltonian into two-variable Hamiltonians.

10. A computer system for decrypting cyphertext, wherein the computer system comprises a decryption module (110) comprising a RSA cryptosystem implementing an algorithm for decrypting the cyphertext, and wherein the algorithm uses the method of at least one of claims 1 to 6.

## Patentansprüche

1. Computerimplementiertes Verfahren zum Lösen eines klassischen Optimisierungsproblems der Primfaktorzerlegung, das auf einem digitalen Computersystem implementiert ist, das einen klassischen Prozessor (10) umfasst, der dafür ausgelegt ist, einen tropischen Zeitentwicklungs-Block-Dezimierungsalgorithmus (TEBD) auszuführen, das Verfahren Folgendes umfassend:
- Eingeben (S201) einer Gitterbasis A und eines Zielgittervektors *t* in eine Eingabevorrichtung (20) des klassischen Prozessors (10);
- Implementieren (S202) eines Gitterbasis-Reduktionsalgorithmus auf der Gitterbasis A in einem Implementierungsmodul (80), wodurch eine reduzierte orthogonale Gitterbasis A' erhalten wird;
- Projizieren des Zielgittervektors t auf die reduzierte orthogonale Gitterbasis A';
- Konstruieren eines nächstliegenden Vektors B des Zielgittervektors t;
- Optimieren (S205) des nächstliegenden Vektors B unter Verwendung des tropischen Zeitentwicklungs-Block-Dezimierungsalgorithmus durch den klassischen Prozessor (10), wobei der tropische Zeitentwicklungs-Block-Dezimierungsalgorithmus reguläre Matrizen mit exponentiell kleinen Werten durch tropische Matrizen ersetzt, und Runden von Gleitkommakoeffizienten des optimalen nächstliegenden Vektors B, um einen ganzzahligen Vektor *w* zu erhalten; und
Ausgeben (S207) des ganzzahligen Vektors *w*.

2. Computerimplementiertes Verfahren nach Anspruch 1, wobei der ganzzahlige Vektor w den kürzesten Abstand zwischen der Gitterbasis A und dem Zielgittervektor *t* darstellt*,* wobei vorzugsweise der kürzeste Abstand zwischen der Gitterbasis A und dem Zielgittervektor *t* eines von gitterbasierter Kryptographie, kryptographischen Post-Quanten-Protokollen, Zahlentheorie, darstellt.

3. Computerimplementiertes Verfahren nach einem der vorhergehenden Ansprüche, das ferner das Berechnen von Paaren von glatten Beziehungen aus dem ganzzahligen Vektor w umfasst.

4. Computerimplementiertes Verfahren nach einem der vorhergehenden Ansprüche, wobei der Gitterbasis-Reduktionsalgorithmus ein Lenstra-Lenstra-Lovasz-Gitterbasis-Reduktionsalgorithmus ist.

5. Computerimplementiertes Verfahren nach einem der vorhergehenden Ansprüche, wobei das Konstruieren eines nächstliegenden Vektors B das Bestimmen (S204) von Gleitkommakoeffizienten des optimalen nächstliegenden Vektors B umfasst.

6. Computerimplementiertes Verfahren nach einem der vorhergehenden Ansprüche, das ferner das Anwenden (S203) einer Rundungsfunktion auf die reduzierte orthogonale Gitterbasis A' umfasst.

7. Computersystem zum Lösen eines klassischen Optimisierungsproblems der Primfaktorzerlegung, das auf einem digitalen Computersystem implementiert ist, das Folgendes umfasst:
- einen Speicher (40) zum Speichern von Daten, die sich auf eine Gitterbasis A, einen Zielgittervektor *t* und ausführbare Computermodule beziehen;
- einen Prozessor (10) zum Ausführen der ausführbaren Computermodule, wobei die ausführbaren Computermodule Folgendes umfassen:
- ein Implementierungsmodul (80) zum Implementieren (S202) eines Gitterbasis-Reduktionsalgorithmus auf der Gitterbasis A, um eine reduzierte orthogonale Gitterbasis A' zu erhalten, wobei das Computersystem dafür ausgelegt ist, den Zielgittervektor t auf die reduzierte orthogonale Gitterbasis A' zu projizieren, und ferner dafür ausgelegt ist, einen nächstliegenden Vektor B des Zielgittervektors t zu konstruieren; und
- ein Zeitentwicklungs-Block-Dezimierungsmodul (TEBD) (50) zum Optimieren (S205) des nächstliegenden Vektors B unter Verwendung eines tropischen Zeitentwicklungs-Block-Dezimierungsalgorithmus durch den klassischen Prozessor (10), wobei der tropische Zeitentwicklungs-Block-Dezimierungsalgorithmus reguläre Matrizen mit exponentiell kleinen Werten durch tropische Matrizen ersetzt, und Runden von Gleitkommakoeffizienten des optimalen nächstliegenden Vektors B, um einen ganzzahligen Vektor *w* zu erhalten.

8. Computersystem nach Anspruch 7, das ferner ein Tropisierungsmodul (70) zum Implementieren einer Tropisierungskarte T und einer Detropisierungskarte D umfasst.

9. Computersystem nach Anspruch 7, das ferner ein Zerlegungsmodul (60) zum Zerlegen eines Hamilton-Operators in Hamilton-Operatoren mit zwei Variablen umfasst.

10. Computersystem zum Entschlüsseln eines Cyphertexts, wobei das Computersystem ein Entschlüsselungsmodul (110) umfasst, das ein RSA-Kryptosystem umfasst, das einen Algorithmus zum Entschlüsseln des Cyphertexts implementiert, und wobei der Algorithmus das Verfahren nach mindestens einem der Ansprüche 1 bis 6 verwendet.

## Revendications

1. Procédé mis en œuvre par ordinateur pour résoudre un problème d'optimisation classique de factorisation d'entier mis en œuvre sur un système d'ordinateur numérique comprenant un processeur classique (10) adapté pour exécuter un algorithme de décimation par blocs à évolution temporelle tropicale (TEBD), le procédé comprenant :
- entrer (S201) une base de réseau A et un vecteur de réseau cible *t* dans un dispositif d'entrée (20) du processeur classique (10) ;
- mettre en œuvre (S202) un algorithme de réduction de base de réseau sur la base de réseau A dans un module de mise en œuvre (80), obtenant ainsi une base de réseau orthogonale réduite A' ;
- projeter le vecteur de réseau cible t sur la base de réseau orthogonale réduite A' ;
- construire un vecteur le plus proche B du vecteur de réseau cible t ;
- optimiser (S205) le vecteur le plus proche B en utilisant l'algorithme de décimation par blocs à évolution temporelle tropicale par le processeur classique (10), dans lequel l'algorithme de décimation par blocs à évolution temporelle tropicale remplace des matrices régulières avec des valeurs exponentiellement petites par des matrices tropicales, et arrondir des coefficients à virgule flottante du vecteur le plus proche B optimal pour obtenir un vecteur entier *w* ; et délivrer en sortie (S207) le vecteur entier *w*.

2. Procédé mis en œuvre par ordinateur selon la revendication 1, dans lequel le vecteur entier w représente la distance la plus courte entre la base de réseau A et le vecteur de réseau cible *t,* dans lequel, de préférence la distance la plus courte entre la base de réseau A et le vecteur de réseau cible *t* est représentative de l'un parmi une cryptographie à base de réseau, des protocoles cryptographiques post-quantiques, théorie des nombres.

3. Procédé mis en œuvre par ordinateur selon l'une quelconque des revendications précédentes, comprenant en outre calculer des paires de relations lisses à partir du vecteur entier w.

4. Procédé mis en œuvre par ordinateur selon l'une quelconque des revendications précédentes, dans lequel l'algorithme de réduction de base de réseau est un algorithme de réduction de base de réseau de Lenstra-Lenstra-Lovasz.

5. Procédé mis en œuvre par ordinateur selon l'une quelconque des revendications précédentes, dans lequel construire un vecteur le plus proche B comprend déterminer (S204) des coefficients à virgule flottante du vecteur le plus proche optimal B.

6. Procédé mis en œuvre par ordinateur selon l'une quelconque des revendications précédentes, comprenant en outre appliquer (S203) une fonction d'arrondissement à la base de réseau orthogonale réduite A'.

7. Système informatique pour résoudre un problème d'optimisation classique de factorisation d'entier mis en œuvre sur un système informatique numérique comprenant :
- une mémoire (40) pour stocker des données relatives à une base de réseau A, un vecteur de réseau cible *t* et des modules d'ordinateur exécutables ;
- un processeur (10) pour exécuter les modules d'ordinateur exécutables, dans lequel les modules d'ordinateur exécutables comprennent :
- un module de mise en œuvre (80) pour mettre en œuvre (S202) un algorithme de réduction de base de réseau sur la base de réseau A pour obtenir une base de réseau orthogonale réduite A', dans lequel le système d'ordinateur est adapté pour projeter le vecteur de réseau cible t sur la base de réseau orthogonale réduite A' et est en outre adapté pour construire un vecteur le plus proche B du vecteur de réseau cible t ; et
- un module de décimation par blocs à évolution temporelle (TEBD) (50) pour optimiser (S205) le vecteur le plus proche B en utilisant un algorithme de décimation par blocs à évolution temporelle tropicale par le processeur classique (10), dans lequel l'algorithme de décimation par blocs à évolution temporelle tropicale remplace des matrices régulières avec des valeurs exponentiellement petites par des matrices tropicales, et arrondir des coefficients à virgule flottante du vecteur le plus proche B optimal pour obtenir un vecteur entier *w*.

8. Système d'ordinateur selon la revendication 7, comprenant en outre un module de tropicalisation (70) pour mettre en œuvre une carte de tropicalisation T et une carte de détropicalisation D.

9. Système d'ordinateur selon la revendication 7, comprenant en outre un module de décomposition (60) pour décomposer un hamiltonien en hamiltoniens à deux variables.

10. Système d'ordinateur pour déchiffrer un cyphertexte, dans lequel le système d'ordinateur comprend un module de déchiffrement (110) comprenant un cryptosystème RSA mettant en œuvre un algorithme pour déchiffrer le cyphertexte, et dans lequel l'algorithme utilise le procédé selon au moins l'une des revendications 1 à 6.
